# EUROPEAN PATENT APPLICATION

(11) **EP 4 738 351 A1**
(43) Date of publication of application: **06.05.2026**
(21) Application number: 25206275.7
(22) Date of filing: 02.10.2025
(51) Int. Cl.: G10L 21/0272, H04S 1/00

(54) **REAL-TIME VOCAL REMOVAL FROM AN AUDIO SOURCE**

(30) Priority: 29.10.2024 US 202418930840
(71) Applicant: Harman Becker Automotive Systems GmbH, 76307 Karlsbad (DE)
(72) Inventor: WILLIS, Maxwell B., 76307 Karlsbad-Ittersbach (DE); DAFTUAR, Rishi Kumar, 76307 Karlsbad-Ittersbach (DE)
(74) Representative: Kraus & Lederer PartGmbB

(57) **Abstract**

Various embodiments disclose a computer-implemented method comprising receiving an audio source for playback by an audio playback system, identifying a left channel and a right channel associated with the audio source, generating a modified left channel comprising the right channel subtracted from the left channel, generating a modified right channel comprising the left channel subtracted from the right channel, causing playback, on a left channel speaker of the audio playback system, of the modified left channel, and causing playback, on a right channel speaker of the audio playback system, of the modified right channel.

## Description

### BACKGROUND

### Field of the Various Embodiments

The various embodiments relate generally to audio processing and, more specifically, to real-time vocal removal from an audio source.

### Description of the Related Art

Modem vehicles include in-vehicle infotainment (IVI) systems that receive audio and video inputs from various sources. The IVI system includes various output devices, such as displays and loudspeakers that are positioned throughout the vehicle. An IVI system obtains an input, such as an audio input, selected by a user from a local or remote audio source, and plays back the audio input using an output device in the vehicle.

Karaoke experiences can be provided by an IVI system and involve one or more users singing along with a prerecorded audio performance that is played back by an audio output device of the IVI system. A user sings along with the prerecorded audio performance and in some instances, a microphone is utilized to capture the user's voice, which is reproduced using the same audio output device that plays back the prerecorded audio performance. In some cases, users prefer to utilize an audio source from which the primary and/or background vocals have been removed. Some prerecorded audio performances are created specifically for use with karaoke experiences by preprocessing an audio source to remove vocal components. The preprocessing is generally performed by a person, such as an audio engineer or producer, or by an automated vocal removal algorithm, and the preprocessed audio source is provided as an audio source to an audio playback system. In other examples, a prerecorded audio performance for use with a karaoke experience is created by recording an instrumental version of a audio source without primary and/or secondary vocals. In either scenario, creating a version of a audio source for use in a karaoke experience requires preprocessing or pre-recording the audio source that it used for the karaoke experience. Another technique for providing a karaoke experience involves playing back a audio source and allowing the user to sing over the unmodified version of the audio source. However, a karaoke experience that is provided using audio sources containing vocals results in a poor karaoke experience for many users.

Some karaoke experiences provide mechanisms for real-time suppression of vocal components of an audio source that is played back during a karaoke experience. One technique for real-time suppression of vocal components is performing mid-band ducking of an audio source, which lowers the volume of the mid-band component of an audio signal, which is where vocal components are often contained. However, with mid-band ducking, other components of the audio other than vocal components are removed, such as instrumental components, degrading the quality of the karaoke experience. Additionally, in the case of a 5.1. 7.1, or other multi-channel audio sources, vocal components are often included in a center channel of the multi-channel audio source. Therefore, the center channel component can be removed or ducked, which lowers the volume of the channel in which vocal components are often contained. However, 5.1, 7.1, or other multi-channel audio sources are often unavailable.

One drawback with utilizing conventional techniques for removing vocal components from audio sources to provide a karaoke experience is that many vocal remover algorithms cannot be utilized in real-time. Vocal removing algorithms often require significant processing time that prevents the algorithms from being used in a real-time manner, such as on audio sources that are streamed for playback. Additionally, utilizing prerecorded karaoke versions of an audio source does not allow users to have a karaoke experience for all audio sources that are played back by the audio playback system. A drawback of performing mid-band ducking on the left and right channels of an audio source is that components of an audio source other than vocal components are removed by these techniques, which degrades the quality of the karaoke experience. A drawback of performing center channel ducking of an audio source containing a discrete center channel is that a discrete center channel is often unavailable for music.

As the foregoing illustrates, what is needed in the art are more effective techniques for processing audio sources that provide an acceptable karaoke experience for users.

### SUMMARY

In various embodiments, a computer-implemented method comprises receiving an audio source for playback by an audio output device, identifying a left channel and a right channel associated with the audio source, causing playback, on a left channel of the audio output device, of a modified left channel comprising the right channel subtracted from the left channel, and causing playback, on a right channel of the audio output device, of a modified right channel comprising the left channel subtracted from the right channel.

At least one technical advantage of the disclosed techniques relative to the prior art is that, with the disclosed techniques, the primary vocal components of an audio source for which a user desires a karaoke experience are attenuated in real-time and with less computational resources than with a vocal removing algorithm. By attenuating or removing the primary vocal components of an audio source in real time, a karaoke experience is provided for virtually any audio sources that are streamed for playback. Additionally, by avoiding utilizing mid-band ducking of the left and right channels, respectively, instrumental content of the audio source is retained. The disclosed techniques can also remove vocal components of two-channel stereo content in the event that 5.1, 7.1, or other multi-channel audio formats with a discrete center channel are unavailable. Also, utilizing a microphone to capture vocal inputs within the vehicle allows for playback of the vocal inputs along with the audio source. Accordingly, playing back the audio source without primary vocals along with the vocal inputs captured by the one or more microphones provides an improved karaoke experience. These technical advantages provide one or more technological advancements over prior art approaches.

### BRIEF DESCRIPTION OF THE DRAWINGS

So that the manner in which the above recited features of the various embodiments can be understood in detail, a more particular description of the inventive concepts, briefly summarized above, can be had by reference to various embodiments, some of which are illustrated in the appended drawings. It is to be noted, however, that the appended drawings illustrate only typical embodiments of the inventive concepts and are therefore not to be considered limiting of scope in any way, and that there are other equally effective embodiments.
Figure 1 illustrates a block diagram of a computing device configured to implement one or more aspects of the present disclosure.
Figure 2 illustrates a block diagram of an IVI system configured to implement one or more aspects of the present disclosure.
Figure 3 illustrates an example of an audio source that is processed according to one or more aspects of the present disclosure.
Figure 4 is a flow diagram of method steps for processing an audio source according to one or more aspects of the present disclosure.

### DETAILED DESCRIPTION

In the following description, numerous specific details are set forth to provide a more thorough understanding of the various embodiments. However, it will be apparent to one skilled in the art that the inventive concepts can be practiced without one or more of these specific details. For explanatory purposes, multiple instances of like objects are symbolized with reference numbers identifying the object and parenthetical numbers(s) identifying the instance where needed.

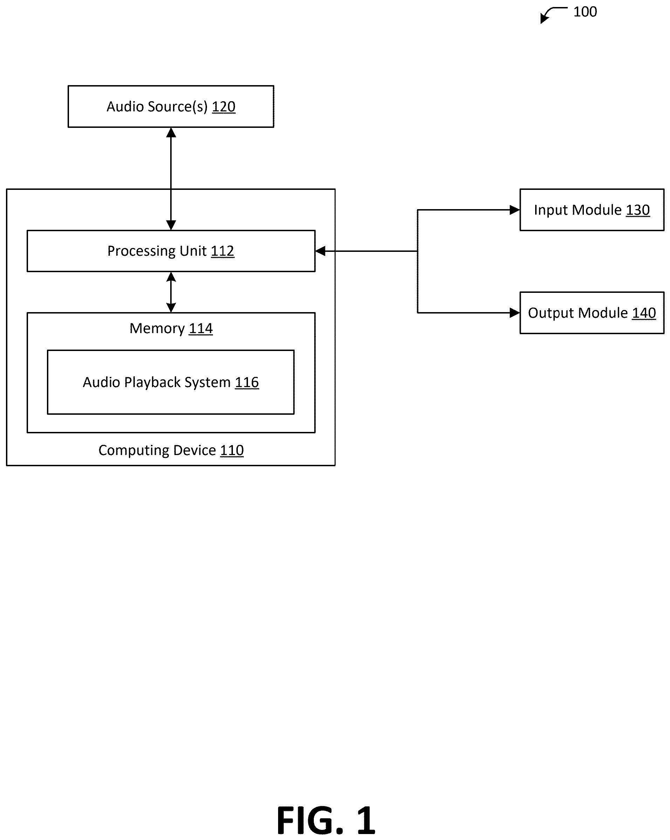

FIG. 1 illustrates a block diagram of an audio playback system configured to implement one or more aspects of the present disclosure. As shown, the audio playback system 100 includes, without limitation, a computing device 110, audio source(s) 120, input module 130, and output module 140. The computing device 110 includes, without limitation, a processing unit 112 and memory 114. The memory 114 includes, without limitation, an audio playback application 116.

In operation, the computing device 110 executes the audio playback application 116 to control the playback of audio. In one example, audio is played back from one or more vehicle components or sources within or outside of a vehicle. In particular, the processing unit 112 executes audio playback application 116 and causes playback of audio on one or more output devices associated with audio playback system 100. The audio playback application 116 receives an audio source 120, such as a terrestrial or satellite radio signal, music or other content obtained from a streaming audio service, audio files stored on a storage device associated with a vehicle, or audio content streamed from another device, such as a Bluetooth device to which the computing device 110 is connected.

Audio playback application 116 also provides a karaoke experience for users in connection with an audio source 120 that is played by audio playback system 100. For example, audio playback application 116 receives an audio input from input module 130, such as a vocal input detected by a microphone associated with audio playback system 100. Audio playback application 116 plays back the audio input on an audio output device, such as one or more loudspeakers, along with the audio source 120. In some cases, audio playback application 116 plays back video content on displays within a vehicle or toggles interior or exterior lighting in addition to playing back the audio source 120 and audio input to enhance the karaoke experience.

The computing device 110 includes the processing unit 112 and the memory 114. In various embodiments, the computing device 110 is a device that includes one or more processing units 112, such as a system-on-a-chip (SoC). In various embodiments, the computing device 110 is a mobile computing device, such as a tablet computer, mobile phone, media player, and so forth that wirelessly connects to other devices in the vehicle. In some embodiments, the computing device 110 is a head unit included in a vehicle system. Additionally, or alternatively, the computing device 110 can be a detachable device that is mounted in a portion of a vehicle as part of an individual console. Generally, the computing device 110 is configured to coordinate the overall operation of the audio playback system 100. The embodiments disclosed herein contemplate any technically feasible system configured to implement the functionality of the audio playback system 100 via the computing device 110. The functionality and techniques of the audio playback system 100 are also applicable to other types of vehicles, including consumer vehicles, commercial trucks, airplanes, helicopters, spaceships, boats, submarines, and so forth.

The processing unit 112 can include one or more central processing units (CPUs), digital signal processing units (DSPs), microprocessors, application-specific integrated circuits (ASICs), neural processing units (NPUs), graphics processing units (GPUs), field-programmable gate arrays (FPGAs), and so forth. The processing unit 112 generally includes a programmable processor that executes program instructions to manipulate input data and generate outputs. In some embodiments, the processing unit 112 can include any number of processing cores, and other modules for facilitating program execution.

The memory 114 includes a memory module or collection of memory modules. The memory 114 generally comprises storage chips such as random-access memory (RAM) chips that store application programs and data for processing by the processing unit 112. In various embodiments, the memory 114 includes non-volatile memory, such as optical drives, magnetic drives, flash drives, or other storage. The audio playback application 116 within the memory 114 is executed by the processing unit 112 to implement the overall functionality of the computing device 110 and, thus, coordinate the operation of the audio playback system 100 as a whole.

The audio playback application 116 processes audio sources 120 and/or audio inputs received from input module 130 to reproduce audio signals. In various embodiments, the audio playback application 116 plays back audio sources 120 via output module 140 along with audio inputs from one or more occupants or users of a vehicle. The audio inputs are obtained via input module 130 to provide a karaoke experience. Additionally, audio playback application 116 processes audio source 120 to remove vocal components from the audio source 120, which provides an improved karaoke experience. The audio source 120 comprises a stereo input signal that includes a left channel and a right channel. Audio playback application 116 removes vocal components from audio source 120 in real time by performing processing operations on the left channel and right channel to generate a modified left channel and modified right channel, respectively. The modified left channel is generated based on the left and right channels of the stereo input. The modified right channel is also generated based on the left and right channels of the stereo input. Additionally, a center channel is generated that includes a combination of the left and right channels of the stereo input. The modified left channel is played back on the left channel of the output module 140, such as via one or more left channel speakers. The modified right channel is played back on the right channel of the output module 140, such as via one or more right channel speakers.

The modified left channel is generated by identifying the left channel and right channel of a stereo input corresponding to audio source 120. Then, the right channel is subtracted from the left channel to create the modified left channel. Subtracting the right channel from the left channel has the effect of removing any content that exists in both channels, which often includes vocal components, but allowing other content to remain in the modified left channel, which often includes instrumental content. The modified right channel is generated by identifying the left channel and right channel of a stereo input corresponding to audio source 120. Then, the left channel is subtracted from the right channel to create the modified right channel. Subtracting left channel from the right channel has the effect of removing any content that exists in both channels, which often includes vocal components, but allowing other content to remain in the modified right channel, which often includes instrumental content.

Audio playback application 116 generates center channel based on the left channel and right channel. The left channel and right channel are summed to create the center channel. In one example, the center channel is played back by both left and right channel speakers of output module 140. In another example, the center channel is played back by the center channel speakers of output module 140. When a user enables a karaoke mode provided by audio playback application 116 or when audio playback application 116 detects an audio input via input module 130 during a karaoke experience, the audio playback application 116 generates a modified center channel based on the center channel created from the left channel and right channel of the audio source 120. The modified center channel is output to output module 140 for playback. The modified center channel in which vocal components are removed or attenuated from the center channel is generated using one or more processing techniques, such as mid-band ducking, mid-band attenuation, compression, or other real time audio processing techniques that remove or attenuate vocal components from the center channel. Audio playback application 116 causes output module 140 to play back the modified center channel, which can involve playing back the modified center channel using the left channel and right channel of output module 140.

In some implementations, audio playback application 116 plays back the modified center channel only when a vocal input from input module 130 is detected. In this scenario, an unmodified center channel is played back when vocal inputs are not being received by input module 130. In some examples, audio playback application 116 plays back the modified center channel when a karaoke mode is selected by a user in audio playback application 116 via a user interface provided by the audio playback application 116. In other examples, audio playback application 116 plays back the modified center channel when more than one occupant of the vehicle is detected and whenever the karaoke mode is enabled in audio playback application 116. In another scenario, a user can select when a vocal input is being provided, such as via a button on a microphone 222 or another user input device. In this case, audio playback application 116 plays back the modified center channel with the user indicates that a vocal input is being provided. In some implementations, when a vocal input is no longer detected after a threshold amount of time, or a termination of vocal input is detected, the audio playback application 116 reverts to outputting the unmodified center channel for playback by output module 140.

The audio source(s) 120 includes one or more data sources that provide an audio signal for reproduction. The audio source 120 includes a prerecorded audio performance, such as a song. In various embodiments, the audio source 120 is included in a device within the vehicle, such as an entertainment subsystem included in the head unit of the vehicle, a rear-seat entertainment console, a device mounted in the vehicle, and so forth. In some embodiments, the audio source 120 is included in a mobile device, wearable device, and/or other portable device that connects to the audio playback application 116. Additionally, the audio source 120 can be remote to the vehicle. In such instances, the remote data source streams the audio source 120 to the computing device 110, whereupon the audio playback application 116 transmits the audio source 120 to an output device associated with output module 140 for reproduction.

The input module 130 includes one or more devices that perform measurements and/or acquire data related to certain subjects in an environment. In various embodiments, the input module 130 generates sensor data that is related to the user and/or objects in the environment that are not the user. In some embodiments, the input module 130 is coupled to and/or included within the computing device 110 and sends sensor data to the processing unit 112.

In various embodiments, the input module 130 includes audio sensors, such as built-in microphones and/or a microphone array that record sounds within the compartment of the vehicle. The vehicle occupant sensors include, for example, optical sensors, such as RGB cameras, infrared cameras, depth cameras, and/or camera arrays, which include two or more of such cameras that are oriented towards the seating area of the vehicle. Compartment sensors include, for example, pressure sensors integrated into seating locations in the vehicle that detect when an occupant is seated in a particular seating location in the vehicle. In some embodiments, the input module 130 includes touch sensors, position sensors (e.g., an accelerometer and/or an inertial measurement unit (IMU)), or other types of sensors that register the presence, body position and/or movement of a user within the vehicle.

In some embodiments, the input module 130 includes physiology sensors, such as heart-rate monitors, electroencephalography (EEG) systems, radio sensors, thermal sensors, galvanic skin response sensors (e.g., sensors that measure change in electrical resistance of skin caused by emotional stress), contactless sensor systems, or magnetoencephalography (MEG) systems. Input module 130 also includes devices capable of receiving input, such as a keyboard, a mouse, a touch-sensitive screen, and other input devices for providing inputs to the computing device 110. In various embodiments, the input module 130 is associated with a specific console, such as personalized screens mounted to a portion of a seat, or console-specific input components.

Output module 140 includes one or more devices capable of providing output, such as a display screen or loudspeakers. In various embodiments, one or more of input module 130 or output module 140 is incorporated in the computing device 110 or is external to the computing device 110. In some embodiments, the computing device 110, input module 130, or output module 140 can be components of an IVI system or an entertainment subsystem included in a vehicle.

### Vehicle System

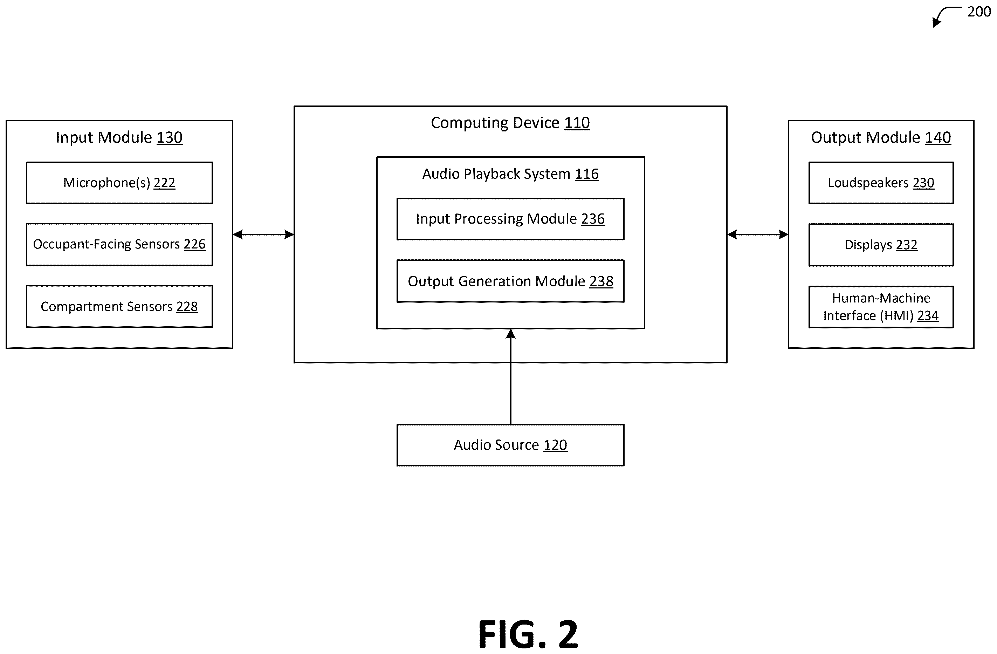

FIG. 2 illustrates an example IVI system 200 that includes the audio playback system 100 of FIG. 1, according to various embodiments. As shown, the IVI system 200 includes, without limitation, an input module 130, computing device 110, and output module 140. The input module 130 includes, without limitation, one or more microphones 222, occupant-facing sensors 226, and compartment sensors 228. The computing device 110 includes, without limitation, the audio playback application 116. The output module 140 includes, without limitation, loudspeakers 230, displays 232, and a human-machine interface (HMI) 234. The audio playback application 116 includes, without limitation, an input processing module 234 and an output generation module 238.

In some embodiments, computing device 110 can be integrated into a head unit of the vehicle. A head unit is a component of the vehicle that is mounted at any location within a passenger compartment of the vehicle in any technically feasible fashion. In some embodiments, the head unit includes any number and type of instrumentation and applications and provides any number of input and output mechanisms. For example, the head unit enables users (e.g., the driver and/or passengers) to control the IVI system. The head unit supports any number of input and output data types and formats, as known in the art. For example, the head unit could include built-in Bluetooth for hands-free calling and/or audio streaming, USB connections, speech recognition, camera inputs via the input module 130, video outputs via the output module 140 for any number and type of displays 232, and any number of audio outputs. In general, any number of sensors, displays, receivers, transmitters, etc., can be integrated into the head unit, or can be implemented externally to the head unit. Additionally, computing device 110 can be located elsewhere in the vehicle, such as hidden behind interior trim panels in a manger that is not visible to passengers.

In operation, audio playback application 116 receives an audio source 120 and causes loudspeakers 230 associated with output module 140 to play back a modified version of the audio source 120 that has been processed by audio playback application 116. The audio source 120 includes a song, radio station, or other audio source that can be played back or streamed by computing device 110. In one scenario, a user of IVI system 200 activates a karaoke mode of the audio playback application 116 via HMI 236 and selects an audio source 120. The modified version of the audio source 120 is a version of the audio source 120 from which primary or all vocal components have been removed by audio playback application 116. To remove vocal components from audio source 120, audio playback application 116 identifies a left channel and right channel in a stereo audio signal that corresponds to the audio source 120. Then, audio playback application 116 generates a modified left channel, a modified right channel, and a center channel based on the left channel and right channel. The center channel is also referred to as a phantom center channel if the center channel signal is played back using an output module 140 that does not include a center channel speaker. Audio playback application 116 outputs the modified left channel and modified right channel to output module 140 for playback. Audio playback application 116 also outputs the center channel or a modified center channel to output module 140 for playback depending upon whether a vocal input is detected via input module 130.

Audio playback application 116 generates the modified left channel by identifying a left channel signal of the audio source 120 and subtracting a right channel signal of the audio source 120 from the left channel. Audio playback application 116 generates the modified right channel signal of the audio source 120 and subtracting a left channel signal of the audio source 120 from the right channel. Because vocal components are often present in both the left channel signal and the right channel signal of an audio source 120, subtracting the opposing signal from the left and right channels has the effect of removing vocal components. As a result, the modified left channel and modified right channel represent signals from which vocal components are removed or attenuated. Audio playback application 116 generates a center channel by summing the left channel and right channel of the audio source 120. In many stereo signals corresponding to an audio source 120, primary and secondary vocals exist in both left and right channels. Accordingly, summing the left channel and right channel produces a center channel in which vocals are present. Audio playback application 116 generates a modified center channel by performing one or more processing operations on the center to remove vocal components.

For example, audio playback application 116 performs mid-band ducking to reduce the level of a midrange band of the center channel to produce a modified center channel. The midrange band can represent a frequency range such as 250 Hz to 4 kHz. In some examples, the midrange band represents a narrower frequency range, such as 500 Hz to 2 kHz. As another example, audio playback application 116 performs mid-band attenuation to reduce a level of the midrange band to produce the modified center channel. As another example, audio playback application 116 performs muting of certain frequencies in the midrange band to reduce or remove vocal components in the center channel to produce the modified center channel. As another example, audio playback application 116 performs compression to reduce the dynamic range of the midrange band to produce the modified center channel. As another example, audio playback application 116 mutes the center channel completely so that only the modified left channel and modified right channel are output for playback by the output module 140.

Audio playback application 116 outputs the modified left channel and modified right channel to output module 140 for playback when a karaoke mode of audio playback application 116 is activated. Output module 140 plays back the modified left channel on one or more left channel speakers. Output module 140 plays back the modified right channel on one or more right channel speakers. Audio playback application 116 outputs the center channel to output module 140 for playback when the karaoke mode is activated. Output module 140 plays back the center channel on the left channel speaker(s) and right channel speaker(s). In some implementations, audio playback application 116 outputs the modified center channel to output module 140 for playback when the karaoke mode of audio playback application 116 is activated, and output module 140 plays back the modified center channel on the left channel speaker(s) and right channel speaker(s).

In one scenario, audio playback application 116 outputs the unmodified center channel to output module 140 for playback when a vocal input to one or more microphones 222 of input module 130 is not detected. When audio playback application 116 detects a vocal input provided by input module 130 via one or more microphones 222, audio playback application 116 outputs the modified center channel to output module 140 for playback. Then, audio playback application 116 outputs the modified center channel to output module 140 until a vocal input is not detected by the one or more microphones 222 for a threshold period of time.

An input obtained by input module 130 includes a vocal input obtained by one or more microphones 222 within the vehicle, such as from occupants of the vehicle participating in karaoke experience. The audio playback application 116 causes the loudspeakers 230 of the output module 140 to play back the vocal input in addition to the audio source 120. In some cases, audio playback application 116 modifies the vocal input by applying compression, reverb, autotune, or other effects to the audio input. Audio playback application 116 plays back the vocal input on an audio output device, such as one or more loudspeakers, along with the audio source 120. In some cases, audio playback application 116 plays back video content on displays within the vehicle or toggles interior or exterior lighting in addition to playing back the audio source 120 and vocal input to enhance the karaoke experience.

Audio playback application 116 also detects a number and/or location of occupants within the vehicle based on inputs received from input module 130. For example, audio playback application 116 detects a seating location within the vehicle based on sensor data from one or more microphones 222, occupant-facing sensors 226 or compartment sensors 228. For example, audio playback application 116 determines that there is more than one occupant of the vehicle and outputs the modified center channel to output module 140 for playback when more than one occupant of the vehicle is detected by input module 130. As another example, audio playback application 116 determines that there is only one occupant within the vehicle and outputs the unmodified center channel until an audio input is detected via the one or more microphones 222. Additionally, audio playback application 116 can apply lighting effects using interior or exterior vehicle lighting that are customized depending upon the number of detected occupants or a detected seating location of occupants of the vehicle. These lighting effects or other customization can be defined by a user profile that is stored in a data store.

The input module 130 includes multiple types of sensors, one or more microphones 222, occupant-facing sensors 226, and compartment sensors 228. In some cases, input module 130 also includes, without limitation, vehicle sensors, such as outward-facing cameras, external microphones, accelerometers, etc. Occupant-facing sensors 226 include cameras or motion sensors that are oriented to detect the presence of occupants within the vehicle. In some cases, occupant-facing sensors 226 can also detect users based on facial recognition so that audio playback application 116 can identify a user profile that specifies karaoke experience preferences, such as selection of a particular vocal removing algorithm. Compartment sensors 228 include other types of sensors, such as pressure sensors, temperature sensors, or other types of sensors that also detect the presence of occupants within the vehicle. In various embodiments, the input module 130 provides a combination of sensor data to audio playback application 116, which can utilize inputs obtained by one or more microphones 222 as well as sensor data from occupant-facing sensors 226 and compartment sensors 228 to determine a number of occupants or a seating location of occupants within the vehicle. Additionally, input module 130 provides audio inputs from one or more microphones 222 that can be played back using loudspeakers 230 within the vehicle when a karaoke mode is selected by a user within the vehicle.

The output module 140 includes multiple types of output devices, including, without limitation, loudspeakers 230, displays 232 and HMI 234. The loudspeakers 230 include one or more left channel speakers and one or more right channel speakers. In some examples, loudspeakers 230 also include a center channel speaker. The output module 140 performs one or more actions in response to an output signal from computing device 110 or other subsystems within the vehicle. For example, the output module 140 receives an audio output from computing device 110, which can include multiple audio outputs that are mixed together by computing device 110. The output module 140 plays back the audio output using loudspeakers 230 within the vehicle. For example, audio playback application 116 mixes an audio source 120 together with an audio input detected by one or more microphones 222 and transmits an audio output including both the audio source 120 and audio input to output module 140, which plays back the audio using loudspeakers 230. As another example, output module 140 receives other information from computing device 110 and causes the displays 232 or HMI 234 to display notifications, messages, alerts, or other information.

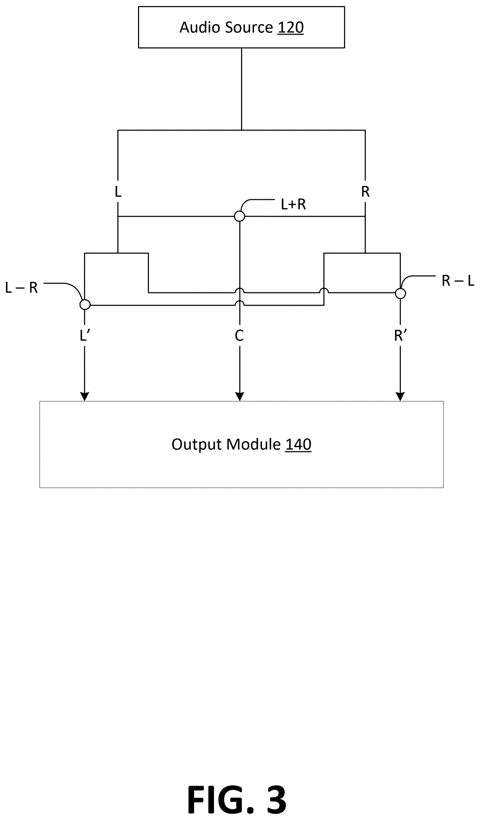

FIG 3 illustrates an example of an audio source 120 that is processed according to one or more aspects of the present disclosure. FIG. 3 illustrates how an audio source 120 that includes a stereo signal is isolated into left and right channels and processed by audio playback application 116 to remove vocal components to facilitate a karaoke experience.

As shown in FIG. 3, audio source 120 represents a stereo signal that includes a left and right channel. Accordingly, the left channel L and right channel R of audio source 120 are isolated by audio playback application 116. Audio playback application 116 sums L and R to generate a center channel C. Audio playback application 116 also generates modified left channel L' by subtracting R from L. Audio playback application 116 generates modified right channel R' by subtracting L from R. L', R', and C are provided to output module 140 for playback by loudspeakers 230 in a vehicle, for example. Output module 140 can play back L' in one or more left channel speakers. Output module 140 can play back R' in one or more right channel speakers. Output module 140 can play back C in a center channel speaker. In the case of an output module 140 that does not include a center channel speaker, C can be played back in both the left channel speaker(s) and right channel speaker(s) to create a phantom center channel speaker. Additionally, audio playback application 116 generates and outputs a modified C to output module 140 when a vocal input is detected or when a karaoke mode is selected by a user, which attenuates or removes the vocal components of C.

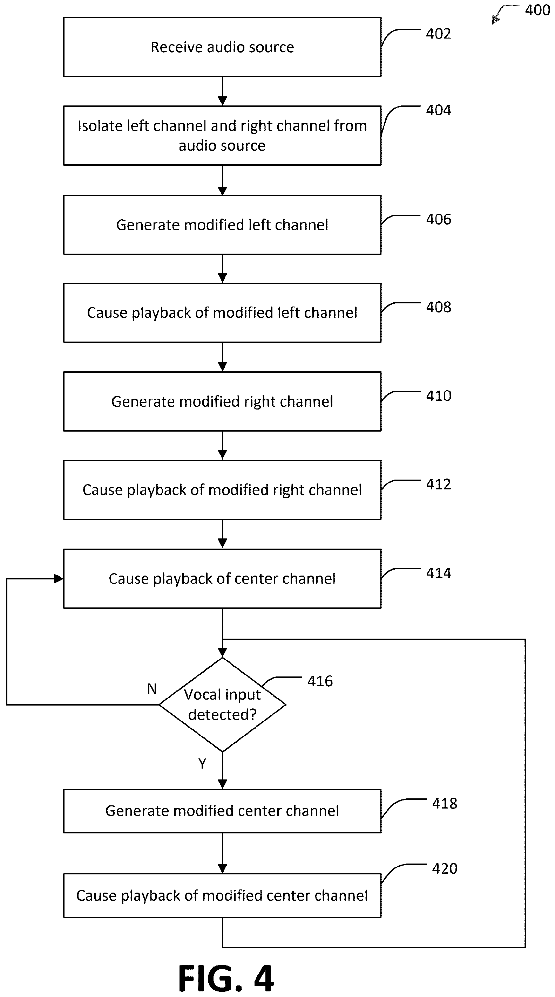

FIG. 4 is a flow diagram of method steps for processing an audio source 120 according to one or more aspects of the present disclosure. Although the method steps are described with respect to the systems of FIGS. 1-3, persons skilled in the art will understand that any system configured to perform the method steps, in any order, falls within the scope of the various embodiments.

As shown, the method 400 begins at step 402, where the audio playback application 116 receives an audio source 120 for playback. The audio source 120 is selected by a user or selected automatically or randomly by the audio playback application 116. In some implementations, the user selects a karaoke mode provided by audio playback application 116 of the IVI system 200 and selects a song via a user interface provided by the IVI system 200.

At step 404, audio playback application 116 isolates the left channel L and right channel R from audio source 120. At step 406, audio playback application 116 generates a modified left channel L' from the left channel L of the audio source 120. The modified left channel L' is created by subtracting the right channel R from the left channel L.

At step 408, audio playback application 116 causes playback of the modified left channel L' by output module 140. Output module 140 plays back the modified left channel L' on one or more left channel loudspeakers.

At step 410, audio playback application 116 generates a modified right channel R' from the right channel R of the audio source 120. The modified right channel R' is created by subtracting the left channel L from the right channel R.

At step 412, audio playback application 116 causes playback of the modified right channel R'. The modified right channel R' is created by subtracting the left channel L from the right channel R. Output module 140 plays back the modified right channel R' on one or more right channel loudspeakers.

At step 414, audio playback application 116 causes playback of a center channel C corresponding to audio source 120. Audio playback application 116 generates the center channel C by summing the contents of the left channel L and right channel R that are isolated from audio source 120. Audio playback application 116 outputs the center channel C to output module 140, which plays back the center channel C via a center channel speaker or via the left channel speaker(s) and right channel speaker(s) to create a phantom center channel.

At step 416, audio playback application 116 determines whether a vocal input is detected via input module 130. A vocal input can be provided by one or more occupants of a vehicle via one or more microphones 222 of the input module 130. If a vocal input is not detected, the method 400 returns to or remains at step 414, where audio playback application 116 plays back the center channel via output module 140. If a vocal input is detected at step 416, the method 400 proceeds to step 418. In some examples, rather than or in addition to awaiting detection of a vocal input, audio playback application 116 proceeds to step 418 when a user enables a karaoke mode via the audio playback application 116.

At step 418, audio playback application 116 generates a modified center channel from the audio source 120. The audio playback application 116 generates the modified center channel by applying one or more processing techniques to the center channel C to attenuate, mute, or otherwise remove vocal components in the center channel C. For example, audio playback application 116 generates the modified center channel in which vocal components are removed or attenuated from the center channel using one or more processing techniques, such as mid-band ducking, mid-band attenuation, compression, or other real time audio processing techniques that remove or attenuate vocal components from the center channel.

At step 420, audio playback application 116 causes playback of the modified center channel by output module 140. The modified center channel is played back by the left channel and right channel speakers of output module 140 if the output module 140 does not include a center channel speaker. If the output module 140 includes a center channel speaker, the modified center channel is played back by the center channel speaker.

The method 400 then returns to step 416, where audio playback application 116 determines whether a vocal input is detected via input module 130 or whether the user has enabled a karaoke mode via the audio playback application 116. In some implementations, when a vocal input is no longer detected after a threshold amount of time, the audio playback application 116 determines that a vocal input is no longer detected. In this scenario, the method 400 would return to step 414, where audio playback application 116 outputs the unmodified center channel C for playback by output module 140. If a vocal input is detected within a threshold amount of time, the method 400 continues to step 418 and step 418420, where the audio playback application 116 generates and outputs the modified center channel.

It should be appreciated that in the method 400 of FIG. 4, steps 406 and 410 can be executed concurrently or in a different order. Similarly, steps 408 and 412 can also be executed concurrently or in a different order. Additionally, steps 408, 412, and 414 can be executed concurrently or in a different order. Also, steps 408, 412, and 420 can be executed concurrently or in a different order.

In sum, an audio playback system causes playback of an audio source, such as a song or instrumental track from a local or remote source, along with an audio input, such as a vocal input from a user. A left channel and right channel associated with the audio source are respectively identified and isolated. A modified left channel is generated that includes the right channel subtracted from the left channel. A modified right channel is generated that includes the left channel subtracted from the right channel. A center channel is generated that includes the left channel summed with the right channel. If a vocal input is detected or a user selects a karaoke mode, a modified center channel is generated from which vocal inputs are removed or attenuated. The modified left channel is output to one or more left channel output device, such as a loudspeaker, for playback. The modified right channel is output to one or more right channel output device, such as a loudspeaker, for playback. The center channel or modified center channel is output to one or more output devices, such as loudspeakers, corresponding to a center channel for playback.

At least one technical advantage of the disclosed techniques relative to the prior art is that, with the disclosed techniques, the primary vocal components of an audio source for which a user desires a karaoke experience are attenuated in real-time. However, certain secondary or background vocals remain in the audio source processed according to the disclosed techniques. By attenuating or removing the primary vocal components of an audio source in real time, a karaoke experience is provided with virtually any audio sources that are streamed for playback. Additionally, utilizing a microphone to capture vocal inputs within the vehicle allows for playback of the vocal inputs along with the audio source. Accordingly, playing back the audio source without primary vocals along with the vocal inputs captured by the one or more microphones provides an improved karaoke experience. These technical advantages provide one or more technological advancements over prior art approaches.
1. In some embodiments, a computer-implemented method comprises receiving an audio source for playback by an audio playback system, identifying a left channel and a right channel associated with the audio source, generating a modified left channel comprising the right channel subtracted from the left channel, generating a modified right channel comprising the left channel subtracted from the right channel, causing playback, on a left channel speaker of the audio playback system, of the modified left channel, and causing playback, on a right channel speaker of the audio playback system, of the modified right channel.
2. The computer-implemented method of clause 1, further comprising generating a center channel comprising the left channel summed with the right channel, and causing playback, on at least one speaker of the audio playback system, of the center channel.
3. The computer-implemented method of clauses 1 or 2, further comprising generating a modified center channel by removing a vocal component from the center channel, and causing playback, on the at least one speaker of the audio playback system, of the modified center channel.
4. The computer-implemented method of any of clauses 1-3, wherein generating the modified center channel comprises muting, attenuating, or ducking a mid-band component of the center channel.
5. The computer-implemented method of any of clauses 1-4, wherein generating the modified center channel comprises compressing the center channel by reducing a dynamic range of the center channel to generate the modified center channel.
6. The computer-implemented method of any of clauses 1-5, further comprising detecting a vocal input from a microphone coupled to the audio playback system, wherein causing playback of the modified center channel is performed in response to detecting the vocal input.
7. The computer-implemented method of any of clauses 1-6, further comprising detecting a termination of the vocal input, and causing playback, on the at least one speaker of the audio playback system, of the center channel in response to detecting the termination of the vocal input.
8. The computer-implemented method of any of clauses 1-7, wherein detecting the vocal input comprises detecting a user input via a microphone or a user input device.
9. The computer-implemented method of any of clauses 1-8, wherein the at least one speaker of the audio playback system comprises a center channel speaker.
10. The computer-implemented method of any of clauses 1-9, wherein the at least one speaker of the audio playback system comprises the left channel speaker and the right channel speaker.
11. The computer-implemented method of any of clauses 1-10, further comprising causing playback, on at least one speaker of the audio playback system, of a vocal input received from at least one microphone coupled to the audio playback system.
12. In some embodiments, one or more non-transitory computer-readable media store instructions that, when executed by one or more processors, cause the one or more processors to perform the steps of receiving an audio source for playback by an audio playback system, identifying a left channel and a right channel associated with the audio source, generating a modified left channel comprising the right channel subtracted from the left channel, generating a modified right channel comprising the left channel subtracted from the right channel, causing playback, on a left channel speaker of the audio playback system, of the modified left channel, and causing playback, on a right channel speaker of the audio playback system, of the modified right channel.
13. The one or more non-transitory computer-readable media of clause 12, wherein the steps further comprise generating a center channel by summing the left channel and the right channel, and generating a modified center channel by removing a vocal component from the center channel, and causing playback, on at least one speaker of the audio playback system, of the modified center channel.
14. The one or more non-transitory computer-readable media of clauses 12 or 13, wherein generating the modified center channel comprises muting, attenuating, or ducking a mid-band component of the center channel.
15. The one or more non-transitory computer-readable media of any of clauses 12-14, wherein the steps further comprise detecting a vocal input from a microphone coupled to the audio playback system, wherein causing playback of the modified center channel is performed in response to detecting the vocal input.
16. The one or more non-transitory computer-readable media of any of clauses 12-15, wherein the steps further comprise detecting a termination of the vocal input, and causing playback, on the at least one speaker of the audio playback system, of the center channel in response to detecting the termination of the vocal input.
17. The one or more non-transitory computer-readable media of any of clauses 12-16, wherein generating the modified center channel comprises compressing the center channel by reducing a dynamic range of the center channel to generate the modified center channel.
18. The one or more non-transitory computer-readable media of any of clauses 12-17, wherein generating the modified center channel is performed in response to user selection of a karaoke mode.
19. In some embodiments, a system comprises one or more audio output devices, a memory storing an audio playback application, and a processor coupled to the memory that executes the audio playback application by performing the steps of receiving an audio source for playback by an audio playback system, identifying a left channel and a right channel associated with the audio source, generating a modified left channel comprising the right channel subtracted from the left channel, generating a modified right channel comprising the left channel subtracted from the right channel, causing playback, on a left channel speaker of the audio playback system, of the modified left channel, and causing playback, on a right channel speaker of the audio playback system, of the modified right channel.
20. The system of clause 19, wherein the one or more audio output devices, the memory, and the processor are integrated into a vehicle.

Any and all combinations of any of the claim elements recited in any of the claims and/or any elements described in this application, in any fashion, fall within the contemplated scope of the present invention and protection.

The descriptions of the various embodiments have been presented for purposes of illustration but are not intended to be exhaustive or limited to the embodiments disclosed. Many modifications and variations will be apparent to those of ordinary skill in the art without departing from the scope and spirit of the described embodiments.

Aspects of the present embodiments can be embodied as a system, method or computer program product. Accordingly, aspects of the present disclosure can take the form of an entirely hardware embodiment, an entirely software embodiment (including firmware, resident software, micro-code, etc.) or an embodiment combining software and hardware aspects that can all generally be referred to herein as a "module," a "system," or a "computer." In addition, any hardware and/or software technique, process, function, component, engine, module, or system described in the present disclosure can be implemented as a circuit or set of circuits. Furthermore, aspects of the present disclosure can take the form of a computer program product embodied in one or more computer readable medium(s) having computer readable program code embodied thereon.

Any combination of one or more computer readable medium(s) can be utilized. The computer readable medium can be a computer readable signal medium or a computer readable storage medium. A computer readable storage medium can be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium can be any tangible medium that can contain or store a program for use by or in connection with an instruction execution system, apparatus, or device.

Aspects of the present disclosure are described above with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions can be provided to a processor of a general-purpose computer, special purpose computer, or other programmable data processing apparatus to produce a machine. The instructions, when executed via the processor of the computer or other programmable data processing apparatus, enable the implementation of the functions/acts specified in the flowchart and/or block diagram block or blocks. Such processors can be, without limitation, general purpose processors, special-purpose processors, application-specific processors, or field-programmable gate arrays.

The flowchart and block diagrams in the figures illustrate the architecture, functionality, and operation of possible implementations of systems, methods and computer program products according to various embodiments of the present disclosure. In this regard, each block in the flowchart or block diagrams can represent a module, segment, or portion of code, which comprises one or more executable instructions for implementing the specified logical function(s). It should also be noted that, in some alternative implementations, the functions noted in the block can occur out of the order noted in the figures. For example, two blocks shown in succession may, in fact, be executed substantially concurrently, or the blocks can sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

While the preceding is directed to embodiments of the present disclosure, other and further embodiments of the disclosure can be devised without departing from the basic scope thereof, and the scope thereof is determined by the claims that follow.

## Claims

1. A computer-implemented method comprising:
receiving an audio source for playback by an audio playback system;
identifying a left channel and a right channel associated with the audio source;
generating a modified left channel comprising the right channel subtracted from the left channel;
generating a modified right channel comprising the left channel subtracted from the right channel;
causing playback, on a left channel speaker of the audio playback system, of the modified left channel; and
causing playback, on a right channel speaker of the audio playback system, of the modified right channel.

2. The computer-implemented method of claim 1, further comprising:
generating a center channel comprising the left channel summed with the right channel; and
causing playback, on at least one speaker of the audio playback system, of the center channel.

3. The computer-implemented method of claim 2, further comprising:
generating a modified center channel by removing a vocal component from the center channel; and
causing playback, on the at least one speaker of the audio playback system, of the modified center channel.

4. The computer-implemented method of claim 3, wherein generating the modified center channel comprises muting, attenuating, or ducking a mid-band component of the center channel.

5. The computer-implemented method of claim 3 or 4, wherein generating the modified center channel comprises compressing the center channel by reducing a dynamic range of the center channel to generate the modified center channel.

6. The computer-implemented method of any of claims 3 to 5, further comprising detecting a vocal input from a microphone coupled to the audio playback system, wherein causing playback of the modified center channel is performed in response to detecting the vocal input.

7. The computer-implemented method of claim 6, further comprising:
detecting a termination of the vocal input; and
causing playback, on the at least one speaker of the audio playback system, of the center channel in response to detecting the termination of the vocal input.

8. The computer-implemented method of claim 6 or 7, wherein detecting the vocal input comprises detecting a user input via a microphone or a user input device.

9. The computer-implemented method of any of claims 2 to 8, wherein the at least one speaker of the audio playback system comprises a center channel speaker.

10. The computer-implemented method of any of claims 2 to 9, wherein the at least one speaker of the audio playback system comprises the left channel speaker and the right channel speaker.

11. The computer-implemented method of any preceding claim, further comprising causing playback, on at least one speaker of the audio playback system, of a vocal input received from at least one microphone coupled to the audio playback system.

12. One or more non-transitory computer-readable media storing instructions that, when executed by one or more processors, cause the one or more processors to perform the of a method as mentioned in any of claims 1 to 11.

13. The one or more non-transitory computer-readable media of claim 12, wherein generating the modified center channel is performed in response to user selection of a karaoke mode.

14. A system comprising:
one or more audio output devices;
a memory storing an audio playback application; and
a processor coupled to the memory that executes the audio playback application by performing the steps of:
receiving an audio source for playback by an audio playback system;
identifying a left channel and a right channel associated with the audio source;
generating a modified left channel comprising the right channel subtracted from the left channel;
generating a modified right channel comprising the left channel subtracted from the right channel;
causing playback, on a left channel speaker of the audio playback system, of the modified left channel; and
causing playback, on a right channel speaker of the audio playback system, of the modified right channel.

15. The system of claim 14, wherein the one or more audio output devices, the memory, and the processor are integrated into a vehicle.
